# EUROPÄISCHE PATENTANMELDUNG

(11) **EP 2 447 490 A1**
(43) Veröffentlichungstag der Anmeldung: **02.05.2012**
(21) Anmeldenummer: 11187058.0
(22) Anmeldetag: 28.10.2011
(51) Int. Cl.: F01N 3/20

(54) **Vorrichtung zur selektiven katalytischen Reduktion von Stickoxiden in einem Abgastrakt eines Kraftfahrzeuges**

(30) Priorität: 29.10.2010 AT 17942010
(71) Anmelder: Mayer, Hanspeter, 8650 Kindberg (AT)
(72) Erfinder: Mayer, Hanspeter, 8650 Kindberg (AT)
(74) Vertreter: Wirnsberger, Gernot

(57) **Zusammenfassung**

Die Erfindung betrifft eine Vorrichtung (1) zur selektiven katalytischen Reduktion von Stickoxiden in einem Abgastrakt (2) eines Kraftfahrzeuges, umfassend einen Tank (3) mit einer für Stickoxide reduzierend wirkenden oder in eine solche Form bringbaren Flüssigkeit, insbesondere einer Harnstoff-Lösung (4), wobei der Tank (3) bis zu einem maximalen Niveau (5) mit der Flüssigkeit füllbar ist, eine erste Leitung (6) mit einem Fördermittel (7) zum Fördern der Flüssigkeit in der ersten Leitung (6), eine zweite Leitung (8), die mit der ersten Leitung (6) verbunden ist und in den Tank (3) über dem Niveau (5) mündend zurückführt, sowie eine dritte Leitung (9), die an einem Anschlusspunkt (10) der zweiten Leitung (8) an der ersten Leitung (6) abzweigt und über welche die Flüssigkeit in den Abgastrakt (2) einspritzbar ist, wobei die erste Leitung (6) und die zweite Leitung (8) miteinander optional über eine vierte Leitung (11) verbunden sind, die ein Druckbegrenzungsmittel (12) aufweist, sodass bei einem Überdruck in der ersten Leitung nach dem Fördermittel (7) die Flüssigkeit zur Druckentlastung in die zweite Leitung (8) eintritt. Erfindungsgemäß ist vorgesehen, dass in der zweiten Leitung (8) ein schaltbares Ventil (13) und in Rückströmrichtung (RS) vorgeordnet ein sich gegen eine Kraft ausdehnendes Speichermedium (14) für die Flüssigkeit vorgesehen ist. Dadurch kann bei Stillstand des Kraftfahrzeuges ein rasches und im Wesentlichen vollständiges Rückführen der Flüssigkeit aus einem Leitungssystem in den Tank (3) sichergestellt werden.

## Beschreibung

Die Erfindung betrifft eine Vorrichtung zur selektiven katalytischen Reduktion von Stickoxiden in einem Abgastrakt eines Kraftfahrzeuges, umfassend einen Tank mit einer für Stickoxide reduzierend wirkenden oder in eine solche Form bringbaren Flüssigkeit, insbesondere einer Harnstoff-Lösung, wobei der Tank bis zu einem maximalen Niveau mit der Flüssigkeit füllbar ist, eine erste Leitung mit einem Fördermittel zum Fördern der Flüssigkeit in der ersten Leitung, eine zweite Leitung, die mit der ersten Leitung verbunden ist und in den Tank über dem Niveau mündend zurückführt, sowie eine dritte Leitung, die an einem Anschlusspunkt der zweiten Leitung an der ersten Leitung abzweigt und über welche die Flüssigkeit in den Abgastrakt einspritzbar ist, wobei die erste Leitung und die zweite Leitung miteinander optional über eine vierte Leitung verbunden sind, die ein Druckbegrenzungsmittel aufweist, sodass bei einem Überdruck in der ersten Leitung nach dem Fördermittel die Flüssigkeit zur Druckentlastung in die zweite Leitung eintritt.

Stickoxide, allgemein als NOₓ bezeichnet, stellen in den Abgasen von Kraftfahrzeugen besonders gefährliche Bestandteile dar, da Stickoxide, insbesondere NO₂ giftig sind. In den vergangenen Jahren wurden erhebliche Anstrengungen unternommen, Stickoxide aus Abgasen der Motoren von Kraftfahrzeugen zu entfernen. Diesbezüglich hat sich die selektive katalytische Reduktion weitgehend durchgesetzt. Hierfür wird eine Flüssigkeit, in der Regel eine Harnstoff-Lösung, die im Handel auch unter der Marke AdBlue® bekannt ist, eingesetzt. Die Harnstoff-Lösung wird in einen Abgastrakt eines Kraftfahrzeuges eingespritzt, und zwar unmittelbar vor einem Katalysator. An dem Katalysator zersetzt sich die Harnstoff-Lösung unter Bildung von Ammoniak. Das Ammoniak reagiert mit den Stickoxiden unter Bildung von ungiftigem Stickstoff sowie Wasserdampf.

Eine Vorrichtung zur selektiven katalytischen Reduktion voll Stickoxiden in einem Abgastrakt eines Kraftfahrzeuges umfasst einen Tank, in dem in der Regel eine Harnstoff-Lösung gelagert ist, die mit einem Fördermittel entlang einer Leitung zu einem Dosierventil befördert wird, wobei die zum Dosierventil geförderte Harnstoff-Lösung durch das Dosierventil in den Abgastrakt dosiert wird. Die üblicherweise verwendete Harnstoff-Lösung hat einen Gefrierpunkt von ―11 °C. Im Betriebszustand der Vorrichtung wird die Harnstoff-Lösung kontinuierlich oder in Abhängigkeit einer Abgaszusammensetzung und/oder -temperatur bedarfsweise zum Dosierventil und durch dieses in den Abgastrakt gefördert. Sobald allerdings die Vorrichtung zum Stillstand kommt, insbesondere bei Abstellen des Kraftfahrzeuges, verbleibt Harnstoff-Lösung zwangsweise in Leitungsabschnitten der Vorrichtung. Dies ist insbesondere dann problematisch, wenn eine Außentemperatur auf weniger als ―11 °C abfällt, da dann die Harnstoff-Lösung in den Leitungsabschnitten gefrieren kann. Dadurch können einzelne Leitungsabschnitte bei einer neuerlichen Inbetriebnahme des Kraftfahrzeuges verstopft sein und überdies das Dosierventil sowie das Leitungssystem insgesamt Schaden erleiden, was einen Ausfall der selektiven katalytischen Reduktion nach sich ziehen kann. Um dies zu vermeiden, sind gemäß dem Stand der Technik auch Vorrichtungen bekannt, bei welchen das gesamte Leitungssystem gefrierfest ausgeführt ist. Derartige Lösungen sind allerdings besonders aufwendig.

Aufgabe der Erfindung ist es, eine Vorrichtung der eingangs genannten Art anzugeben, bei dem nach Betrieb bzw. einem Einspritzen auf einfache Weise eine rasche und möglichst vollständige Entleerung des Leitungssystems möglich ist.

Diese Aufgabe wird erfindungsgemäß gelöst, wenn bei einer Vorrichtung der eingangs genannten Art in der zweiten Leitung ein schaltbares Ventil und in Rückströmrichtung vorgeordnet ein sich gegen eine Kraft ausdehnendes Speichermedium für die Flüssigkeit vorgesehen ist.

Ein mit der Erfindung erzielter Vorteil ist insbesondere darin zu sehen, dass die einzelnen Leitungen, insbesondere ein Leitungsabschnitt zwischen Fördermittel und Dosierpumpe sowie ein in den Tank rückführender Leitungsabschnitt, rasch und zumindest nahezu vollständig entleert und belüftet werden können. Damit ist eine Gefahr des Gefrierens einer Flüssigkeit, insbesondere einer Harnstoff-Lösung, in den einzelnen Leitungsabschnitten deutlich verringert. In dem sich gegen eine Kraft ausdehnenden Speichermedium wird die Flüssigkeit während eines Betriebes bzw. Einspritzens gespeichert, wobei wie am Dosierventil ein Druck anliegt. Sobald das Fördermittel abgestellt und ein Betrieb unterbrochen wird, öffnet das schaltbare Ventil und der im Speichermedium vorhandene Druck kann abgebaut werden, indem sich die Flüssigkeit zum Tank hin bewegt. Durch diesen Impuls wird eine durchgehende Flüssigkeitssäule gebildet, sodass es zu einer im Wesentlichen vollständigen Entleerung der einzelnen Leitungsabschnitte zwischen Fördermittel und Dosierpumpe bzw. Fördermittel und schaltbarem Ventil kommt. Ein Leitungsabschnitt zwischen dem Fördermittel und dem Tank wird dabei nicht entleert, dem kann aber entgegengewirkt werden, indem entweder das Fördermittel unmittelbar am Tank bodenseitig angeordnet ist oder kurzzeitig mit umgekehrter Förderrichtung betrieben wird, wobei auch allenfalls noch in den übrigen Leitungsabschnitten vorhandene Reste der Flüssigkeit in den Tank zurückgefördert werden.

Bei einer erfindungsgemäßen Vorrichtung ist es des Weiteren von Vorteil, dass diese auch ein im Wesentlichen vollständiges Entleeren einzelner Leitungsabschnitte auf ausschließlich mechanische Weise erlaubt. Hierfür kann das schaltbare Ventil so ausgeführt sein, dass dieses bei einem Abfall elektrischer Spannung bzw. einem Stromausfall automatisch rasch öffnet und somit die gewünschte Entleerung der Leitungsabschnitte gegeben ist. Möglich ist es beispielsweise, dass das schaltbare Ventil federbelastet ist und bei plötzlichem Abfall einer Betriebsspannung die Federkraft aufgehoben wird, um das Ventil in einen offenen Zustand zu schalten. Dies ist insbesondere bei einem Notfall zweckmäßig. Bei einer derartigen Notabschaltfunktion bzw. "Shut-down"-Funktion kann durch das Speichermedium in Verbindung mit dem schaltbaren Ventil eine weitgehende Entleerung von Leitungsabschnitten gewährleistet werden, auch wenn keine Betriebsspannung gegeben ist. Durch die Entleerung wird in der Folge ein Gefrieren der Lösung bei tiefen Temperaturen in den Leitungsabschnitten verhindert.

Das Fördermittel kann an sich auf beliebige Weise ausgebildet sein, ist mit Vorteil aber eine Förderpumpe, insbesondere eine Membranpumpe. Sofern eine Membranpumpe vorgesehen ist, kann diese durch einen Elektromotor oder einen schwingenden Magneten angetrieben sein. Um gegebenenfalls nach einem Entleeren von Leitungen auch ein Rückfördern von verbliebener Restflüssigkeit in den Tank zu ermöglichen, ist die Förderpumpe vorzugsweise so ausgelegt, dass diese während eines Betriebes bzw. Einspritzens die Flüssigkeit in Förderrichtung und nach dem Entleeren der Leitungen entgegen der Förderrichtung fördern kann.

Zweckmäßigerweise ist dem Fördermittel in einer Förderrichtung ein Filter vorgeschaltet, sodass eine Kontamination einzelner Leitungsabschnitte vermieden werden kann. Beim Entleeren der Leitungsabschnitte bzw. einem Entspannen des Speichermediums und der Bildung einer durchgehenden Flüssigkeitssäule bildet sich am Ende derselben ein Unterdruck aus. Um diesem Unterdruck entgegenzuwirken, kann die erste Leitung mit einem Belüftungsventil in Verbindung stehen. Durch dieses Belüftungsventil kann von außen Luft in die erste Leitung eintreten, um diese zu belüften bzw. einen Unterdruck abzubauen oder zu vermeiden. Diesbezüglich ist es zweckmäßig, dass die vierte Leitung vorgesehen ist und das Belüftungsventil zwischen einem Anschlusspunkt der vierten Leitung und dem Anschlusspunkt der zweiten Leitung angeordnet ist. Besonders bevorzugt ist es, dass das Belüftungsventil bei einem Unterdruck in der ersten Leitung im Abschnitt nach dem Fördermittel, in Förderrichtung betrachtet, automatisch öffnet. Ein automatisches Öffnen wird zweckmäßigerweise durch ein rein mechanisch arbeitendes Belüftungsventil sichergestellt, damit dieses auch im bereits erwähnten Notfall selbsttätig aktivierbar ist. Beispielsweise kann vorgesehen sein, dass das Belüftungsventil ein gegen eine Federkraft gelagertes Rückschlagventil ist. Ein derartiges Rückschlagventil öffnet automatisch, sobald an einer Außenseite Luftdruck anliegt, in der ersten Leitung jedoch ein kleinerer Druck als der Luftdruck gegeben ist.

In einem Bereich der ersten Leitung kann ein Drucksensor vorgesehen sein, um einen Druck zu kontrollieren und das Fördermittel in Abhängigkeit dieses Druckes zu steuern.

Das Speichermedium kann beispielsweise als gegen eine Federkraft gelagerter Kolben ausgebildet sein. Auch andere Varianten sind denkbar. Möglich ist es beispielsweise auch, dass zumindest ein Teilabschnitt der zweiten Leitung als druckelastischer Leitungsabschnitt ausgebildet ist, der sich bei gegebenem Druck aufbläht und bei Öffnen des schaltbaren Ventils wieder auf einen ursprünglichen Querschnitt zusammenzieht.

Entsprechend den vorstehend dargestellten Vorteilen einer erfindungsgemäßen Vorrichtung wird diese bevorzugt in einem Kraftfahrzeug mit einem Abgastrakt eingesetzt.

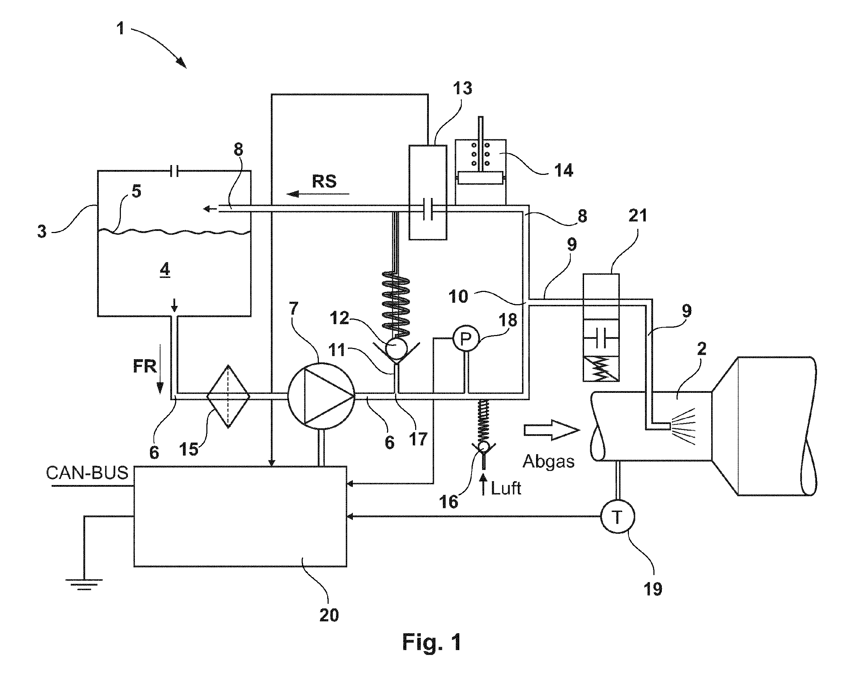

Weitere Merkmale, Vorteile und Wirkungen der Erfindung ergeben sich aus dem nachfolgend dargestellten Ausführungsbeispiel. In der Zeichnung, auf welche dabei Bezug genommen wird, zeigt die einzige Fig. 1 eine erfindungsgemäße Vorrichtung.

In Fig. 1 ist eine erfindungsgemäße Vorrichtung 1 dargestellt, die an einen Abgastrakt 2 eines Motors eines Kraftfahrzeuges angekoppelt ist. Die Vorrichtung 1 umfasst einen Tank 3, in dem eine Harnstoff-Lösung 4 oder eine andere für Stickoxide reduzierend wirkende oder durch Reaktion oder Zersetzung in eine solche Form bringbare Flüssigkeit bis zu einem Niveau 5 gelagert ist. An einem Boden des Tanks 3 schließt eine erste Leitung 6 an, die sich bis zu einem Anschlusspunkt 10 einer zweiten Leitung 8 erstreckt. Entlang der ersten Leitung 6 ist ein Fördermittel 7 vorgesehen, in der Regel eine Membranpumpe, welche die Harnstoff-Lösung 4 sowohl in Förderrichtung FR als auch entgegengesetzt dazu bzw. in den Tank 3 zurückfördern kann. Des Weiteren ist an der ersten Leitung 6 ein Drucksensor 18 vorgesehen, der wie das Fördermittel 7 mit einer zentralen Kontrolleinheit 20 in Verbindung steht. Die Signale des Drucksensors 18 werden der Kontrolleinheit 20 zugeleitet, die in Abhängigkeit dieser Signale das Fördermittel 7 regelt. Dem Fördermittel 7 ist in Förderrichtung FR ein Filter 15 vorgeschaltet, um allfällige Schwebstoffe oder dergleichen aus der Harnstoff-Lösung 4 auszufiltern und somit eine für ein späteres Einspritzen gereinigte Lösung zur Verfügung zu haben. Die erste Leitung 6 geht wie erwähnt am Anschlusspunkt 10 in die zweite Leitung 8 über. An dem Anschlusspunkt 10 zweigt darüber hinaus eine dritte Leitung 9 ab, die ein Dosierventil 21 aufweist. Über das Dosierventil 21 wird eine vorbestimmte Menge der Harnstoff-Lösung 4 in den Abgastrakt 2 eingebracht. Hierfür ist zweckmäßigerweise ein im Abgastrakt 2 mündender Zerstäuber vorgesehen, welcher die Harnstoff-Lösung 4 fein verteilt ausgibt. Es kann aber auch vorgesehen sein, dass ein Auslass des Dosierventils 21 unmittelbar im Abgastrakt 2 mündet. Im Abgastrakt 2 zersetzt sich die eingespritzte Harnstoff-Lösung 4 an einem nicht dargestellten Katalysator unter Bildung von Ammoniak, das wiederum mit Stickoxiden des Abgases reagiert. Um optimale Mengen der Harnstoff-Lösung 4 in den Abgastrakt 2 einzuspritzen, ist im Abgastrakt 2 ein Temperatursensor 19 vorgesehen, der ebenso wie der Drucksensor 18 und das Fördermittel 7 mit der zentralen Kontrolleinheit 20 in Verbindung steht. Die zweite Leitung 8 mündet über dem Niveau 5 im Tank 3 und kann, wie in Fig. 1 dargestellt, mit der ersten Leitung 6 über eine vierte Leitung 11 zusätzlich verbunden sein. In der vierten Leitung 11 ist ein Druckbegrenzungsmittel 12 vorgesehen, das ein federbelastetes Rückschlagventil sein kann. Das Druckbegrenzungsmittel 12 gibt die vierte Leitung 11 frei, wenn ein Druck in der ersten Leitung 6 einen vorbestimmten Schwellwert erreicht. Nach Freigabe der vierten Leitung 11 kann dann die Harnstoff-Lösung 4 über die vierte Leitung 11 und die zweite Leitung 8 in den Tank 3 rückgeführt werden, bis der vorgegebene Schwellwert wieder unterschritten ist und das Druckbegrenzungsmittel 12 die vierte Leitung 11 wieder verschließt.

Im Bereich der zweiten Leitung 8 ist im Abschnitt zwischen dem Anschlusspunkt 10 und einem Anschlusspunkt der vierten Leitung 11 ein Speichermedium 14 vorgesehen, das wie dargestellt einen gegen eine Federkraft verschiebbaren Kolben umfasst. Alternativ ist es beispielsweise auch möglich, dass das Speichermedium 14 als druckelastischer Leitungsabschnitt der zweiten Leitung 8 ausgebildet ist. In Rückströmrichtung RS ist dem Speichermedium 14 ein schaltbares Ventil 13 nachgeordnet. Das schaltbare Ventil 13 steht mit der zentralen Kontrolleinheit 20 in Verbindung und kann bei Bedarf in einen offenen Zustand geschaltet werden. Im Bereich der ersten Leitung 6 ist nach einem Anschlusspunkt 17 der vierten Leitung 11 ein Belüftungsventil 16 vorgesehen, in der Regel ein federbelastetes Rückschlagventil. Beim Betrieb der Vorrichtung fördert das Fördermittel 7 Harnstoff-Lösung 4 zum Dosierventil 21. Über das Dosierventil 21 wird eine erforderliche Menge der Harnstoff-Lösung 4 dem Zerstäuber im Abgastrakt 2 zugeführt. Dabei kann hinsichtlich des Fördermittels 7 eine mengengeregelte Dosierpumpe oder eine Konstantstrom-Förderpumpe vorgesehen sein. Zu viel geförderte Harnstoff-Lösung 4 erzeugt einen Überdruck und wird über die vierte Leitung 11 in den Tank 3 zurückgeführt. Des Weiteren wird im Betrieb, je nach vorgegebenem Druck, das Speichermedium 14 gegen eine Kraft ausgedehnt.

Im Fall einer Notentlüftung bei unvorhergesehenem Abstellen eines Fahrzeuges oder bei Ausfall der elektrischen Spannung wie auch im Fall einer regulären Entlüftung nach Dosierende wird das Ventil 13 rasch geöffnet und der im Speichermedium 14 vorhandene Druck abgebaut. Der gespeicherte Druck entlastet sich in Form einer Flüssigkeitssäule in Richtung der zweiten Leitung 8 zum Tank 3 hin und erzeugt einen Förderimpuls. Dieser Förderimpuls ist so stark, dass die vorgelagerten Leitungen bis hin zum Fördermittel 7 vollständig oder zumindest weitgehend entleert werden. Aufgrund des durch den Impuls entstehenden Unterdrucks öffnet das Belüftungsventil 16 und Luft strömt in die einzelnen Leitungsabschnitte ein. Gleichzeitig kann das Fördermittel 7 eine allenfalls in den Leitungsabschnitten noch verbliebene geringe Restmenge an Harnstoff-Lösung 4 in den Tank zurückpumpen.

Möglich ist auch eine Notabschaltfunktion, für welche das schaltbare Ventil 13 so ausgeführt ist, dass es bei einem Abfall einer elektrischen Spannung mechanisch öffnet und somit den vorstehend beschriebenen Prozess der Entleerung einzelner Leitungsabschnitte und Belüftung derselben einleitet. Bei ausreichender elektrischer Spannung schließt dann das schaltbare Ventil 13 wieder.

Während eines Entleerens und Belüftens ist es von Vorteil, dass das Dosierventil 21 geschlossen wird, damit keine Abgase und im Fall von dieselbetriebenen Kraftfahrzeugen Rußanteile in die einzelnen Leitungsabschnitte gelangen können.

## Patentansprüche

1. Vorrichtung (1) zur selektiven katalytischen Reduktion von Stickoxiden in einem Abgastrakt (2) eines Kraftfahrzeuges, umfassend einen Tank (3) mit einer für Stickoxide reduzierend wirkenden oder in eine solche Form bringbaren Flüssigkeit, insbesondere einer Harnstoff-Lösung (4), wobei der Tank (3) bis zu einem maximalen Niveau (5) mit der Flüssigkeit füllbar ist, eine erste Leitung (6) mit einem Fördermittel (7) zum Fördern der Flüssigkeit in der ersten Leitung (6), eine zweite Leitung (8), die mit der ersten Leitung (6) verbunden ist und in den Tank (3) über dem Niveau (5) mündend zurückführt, sowie eine dritte Leitung (9), die an einem Anschlusspunkt (10) der zweiten Leitung (8) an der ersten Leitung (6) abzweigt und über welche die Flüssigkeit in den Abgastrakt (2) einspritzbar ist, wobei die erste Leitung (6) und die zweite Leitung (8) miteinander optional über eine vierte Leitung (11) verbunden sind, die ein Druckbegrenzungsmittel (12) aufweist, sodass bei einem Überdruck in der ersten Leitung (6) nach dem Fördermittel (7) die Flüssigkeit zur Druckentlastung in die zweite Leitung (8) eintritt, **dadurch gekennzeichnet, dass** in der zweiten Leitung (8) ein schaltbares Ventil (13) und in Rückströmrichtung (RS) vorgeordnet ein sich gegen eine Kraft ausdehnendes Speichermedium (14) für die Flüssigkeit vorgesehen ist.

2. Vorrichtung (1) nach Anspruch 1, **dadurch gekennzeichnet, dass** das Fördermittel (7) als Förderpumpe, insbesondere Membranpumpe, ausgebildet ist.

3. Vorrichtung (1) nach Anspruch 1 oder 2, **dadurch gekennzeichnet, dass** dem Fördermittel (7) in einer Förderrichtung (FR) ein Filter (15) vorgeschaltet ist.

4. Vorrichtung (1) nach einem der Ansprüche 1 bis 3, **dadurch gekennzeichnet, dass** die erste Leitung (6) mit einem Belüftungsventil (16) in Verbindung steht.

5. Vorrichtung (1) nach Anspruch 4, **dadurch gekennzeichnet, dass** die vierte Leitung (11) vorgesehen ist und das Belüftungsventil (16) zwischen einem Anschlusspunkt (17) der vierten Leitung (11) und dem Anschlusspunkt (10) der zweiten Leitung (8) angeordnet ist.

6. Vorrichtung (1) nach Anspruch 4 oder 5, **dadurch gekennzeichnet, dass** das Belüftungsventil (16) bei einem Unterdruck in der ersten Leitung (6) im Abschnitt nach dem Fördermittel (7), in Förderrichtung (FR) betrachtet, automatisch öffnet.

7. Vorrichtung (1) nach einem der Ansprüche 1 bis 6, **dadurch gekennzeichnet, dass** in einem Bereich der ersten Leitung (6) ein Drucksensor (18) vorgesehen ist.

8. Vorrichtung (1) nach einem der Ansprüche 1 bis 7, **dadurch gekennzeichnet, dass** das Speichermedium (14) als gegen eine Federkraft gelagerter Kolben ausgebildet ist.

9. Vorrichtung (1) nach einem der Ansprüche 1 bis 7, **dadurch gekennzeichnet, dass** zumindest ein Teilabschnitt der zweiten Leitung (8) als druckelastischer Leitungsabschnitt ausgebildet ist.

10. Kraftfahrzeug mit einem Abgastrakt (2), umfassend eine Vorrichtung (1) nach einem der Ansprüche 1 bis 9.
